# EUROPEAN PATENT APPLICATION

(11) **EP 4 717 434 A1**
(43) Date of publication of application: **01.04.2026**
(21) Application number: 25205659.3
(22) Date of filing: 30.09.2025
(51) Int. Cl.: B29C 45/76

(54) **MOLDING MACHINE**

(30) Priority: 30.09.2024 JP 2024170743
(71) Applicant: Toyo Innovex Co., Ltd., Akashi-shi, Hyogo (JP)
(72) Inventor: SAWADA, Yasutake, Akashi-shi, Hyogo (JP); OKA, Masaaki, Akashi-shi, Hyogo (JP); SAKAKIBARA, Masato, Akashi-shi, Hyogo (JP)
(74) Representative: Pintz, György

(57) **Abstract**

An injection molding machine includes: a storage device (73) configured to store one or more change information entities, each change information entity related to a change in a set value of a set item; and a control device (78) configured to cause a display device (71) to display the one or more change information entities. Each change information entity is stored in the storage device (73) corresponding to one of molding condition information entities indicating molding conditions incorporated into the control device (78) for molding a molded article at the time of changing the set value of the set item. When a selection operation of selecting one of the molding condition information entities is input to an input device (72), the control device (78) extracts the one or more change information entities corresponding to the molding condition information entity selected by the selection operation from the plurality of change information entities stored in the storage device (73) to be displayed on the display device (71).

## Description

### BACKGROUND OF THE INVENTION

### Field of the Invention

The present invention relates to a molding machine.

### Description of the Related Art

PTL 1 discloses an example of management systems for molding machines in the past. Such a management system has a screen to display histories (change information entities) of changing molding conditions. On the screen, the names of the molding conditions are displayed corresponding to the change information entities related to the respective changes in set values included in the molding conditions.

PTL 1 refers to JP 2005-231251 A.

### SUMMARY OF THE INVENTION

However, the management system in PTL 1 stores the change information entities per day and allows the change information entities to be displayed by specifying the date of change, but it is not possible to display the change information entities for each molding condition name. Thus, the change information entities corresponding to the plurality of molding condition names are sometimes displayed in a mixed manner, and when an operator intends to refer to the change information entity(-ies) corresponding to a certain molding condition name, there is a risk of referring to the change information entity(-ies) corresponding to a different molding condition name by mistake.

In view of such a circumstance, one or more embodiments of the present disclosure provide a molding machine capable of suppressing errors in referring to one or more change information entities corresponding to each molding condition.

A molding machine according to the present invention includes: a storage device configured to store one or more change information entities, each change information entity related to a change in a set value of a set item; and a control device configured to cause a display device to display the one or more change information entities, wherein each change information entity is stored in the storage device corresponding to one of molding condition information entities indicating molding conditions incorporated into the control device for molding a molded article at a time of changing the set value of the set item, and when a selection operation of selecting one of the molding condition information entities is input to an input device, the control device extracts the one or more change information entities corresponding to the molding condition information entity selected by the selection operation from the one or more change information entities stored in the storage device to be displayed on the display device.

The present invention causes the one or more change information entities corresponding to the molding condition information entity (molding condition) selected by the selection operation to be extracted from the one or more change information entities stored in the storage device and to be displayed. Such a configuration allows selection of one molding condition from the plurality of molding conditions and display of only the change information entity(-ies) corresponding to the selected molding condition. It is thus possible to avoid displaying the change information entities corresponding to the plurality of molding conditions in a mixed manner and to suppress errors in referring to the one or more change information entities corresponding to each molding condition.

### BRIEF DESCRIPTION OF THE DRAWINGS

FIG. 1 is a diagram illustrating a schematic configuration of an injection molding machine according to an embodiment of the present invention.
FIG. 2 is a functional block diagram of the injection molding machine.
FIG. 3 is a diagram illustrating an example of an identifying information entity table to be stored in a storage device of the injection molding machine.
FIG. 4 is a diagram illustrating an example of a change information entity table to be stored in the storage device of the injection molding machine.
FIG. 5 is a diagram illustrating an example of a set screen to be displayed on a display device of the injection molding machine.
FIG. 6 is a diagram illustrating a first example of a setting history screen to be displayed on the display device of the injection molding machine.
FIG. 7 is a diagram illustrating a second example of the setting history screen to be displayed on the display device of the injection molding machine.
FIG. 8 is a diagram illustrating a third example of the setting history screen to be displayed on the display device of the injection molding machine.
FIG. 9 is a diagram illustrating a fourth example of the setting history screen to be displayed on the display device of the injection molding machine.

### DETAILED DESCRIPTION OF THE INVENTION

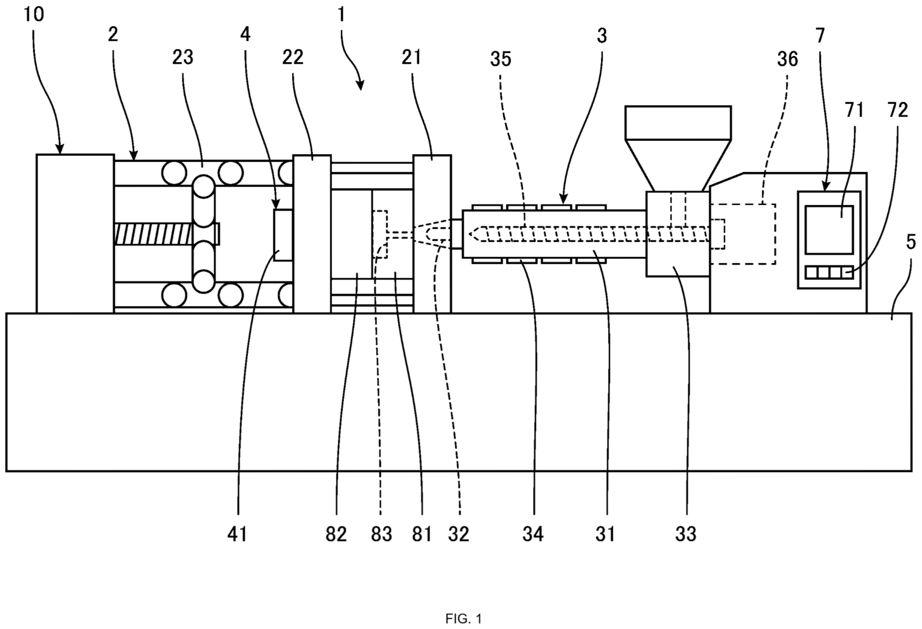

A description is given below to an injection molding machine according to some embodiments of the present invention with reference to FIGs. 1 through 9. The injection molding machine plasticizes a resin to be a material for molded articles and injects the material into a cavity in a mold for forming the molded articles.

As illustrated in FIG. 1, an injection molding machine 1 according to the present embodiment has a molding machine body 10 including a clamping device 2, an injection device 3, and an ejector device 4. The molding machine body 10 is arranged on a base 5. In addition, the injection molding machine 1 has a control unit 7 to control the molding machine body 10.

The clamping device 2 opens, closes, and clamps a fixed-side mold 81 and a movable-side mold 82. The fixed-side mold 81 and the movable-side mold 82 form a cavity 83.

The clamping device 2 has a fixed die plate 21, a movable die plate 22, and a clamp driving mechanism 23. To the fixed die plate 21, the fixed-side mold 81 is attached. To the movable die plate 22, the movable-side mold 82 is attached. The clamp driving mechanism 23 has, for example, an electric motor, a ball screw mechanism, and a toggle link mechanism. The clamp driving mechanism 23 causes the fixed die plate 21 and the movable die plate 22 to clamp the fixed-side mold 81 and the movable-side mold 82 in a front-back direction (left-right direction in FIG. 1) and thus generates a clamping force.

The injection device 3 has a cylinder 31, a nozzle 32, a resin feeding section 33, heaters 34, a screw 35, and a screw driving mechanism 36.

The cylinder 31 has a cylindrical shape. The cylinder 31 is arranged along the front-back direction. The nozzle 32 is arranged at a distal end of the cylinder 31. The resin feeding section 33 is arranged at a rear end of the cylinder 31. The resin feeding section 33 has a hopper to store a powder or granular resin as a material for molded articles. The resin feeding section 33 supplies the resin to the cylinder 31. The heaters 34 are, for example, band heaters and are arranged around an outer circumferential surface of the cylinder 31. The screw 35 is stored in the cylinder 31 rotatably and movably to the front and back. The screw driving mechanism 36 has, for example, an electric motor and a ball screw mechanism. The screw driving mechanism 36 causes the screw 35 to rotate and move forward and backward.

The ejector device 4 has an ejector pin, not shown, and a projection mechanism 41. The projection mechanism 41 has, for example, an air cylinder. The projection mechanism 41 drives the ejector pin to remove a molded article from the movable-side mold 82.

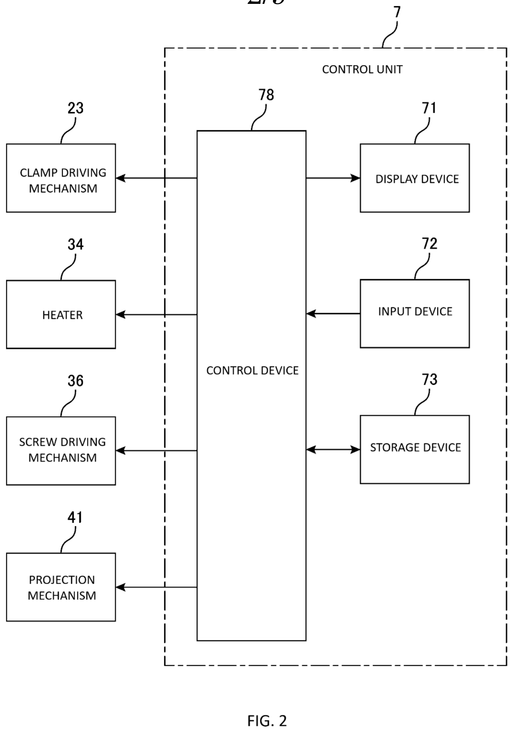

The control unit 7 manages the entire operation of the injection molding machine 1. As illustrated in FIG. 2, the control unit 7 has a display device 71, an input device 72, a storage device 73, and a control device 78.

The display device 71 is, for example, a flat panel display, such as a liquid crystal display.

The input device 72 is, for example, operation keys or a touchscreen. Such an operation key is, for example, a key of a hardware keyboard. Such a touchscreen is arranged superimposed on a display surface of the display device 71 to configure software keys in combination with button graphics, toggle switch graphics, and the like displayed on the display surface. Touching a spot corresponding to one of the button graphics or the toggle switch graphics on the touchscreen (tapping one of the graphics, etc.) is equivalent to operating one of the software keys, that is, inputting an operation to the input device 72.

The storage device 73 is, for example, a magnetic disk device, a non-volatile memory, or the like.

The storage device 73 stores a plurality of molding conditions to be used for forming molded articles. The molding conditions are stored in a file format allowing the control device 78 to read and write. In the present embodiment, the name of each molding condition stored in the storage device 73 is the name (product name) of molded articles to be molded using the molding condition. The names of the molding conditions are composed of respective character strings different from each other. The control device 78 identifies the molding conditions by the name of each molding condition. The control device 78 may identify the molding conditions by a file name of each molding condition. The control device 78 reads (i.e., incorporates) one of the molding conditions from the storage device 73 to use it for molding of molded articles.

Each molding condition includes items related to driving of the clamping device 2, the injection device 3, the ejector device 4, and the like of the injection molding machine 1. Examples of set values to be set to the items (molding condition items) included in the molding conditions are speed, pressure, temperature, time, moving distance, and the like.

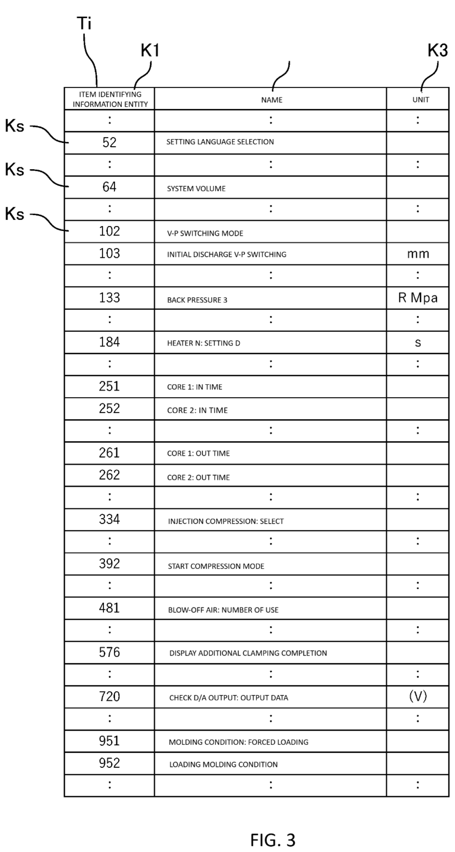

The storage device 73 also stores an item identifying information entity table Ti exemplified in FIG. 3. The item identifying information entity table Ti includes an item identifying information entity set Ks including information entities (item identifying information entities) for identifying the molding condition items and control items not included in the molding conditions, and their related information entities. Examples of the molding condition items include **"INITIAL** DISCHARGE V-P SWITCHING", "BACK PRESSURE 3", and the like. Examples of the control items not included in the molding conditions include "SETTING LANGUAGE SELECTION", "SYSTEM VOLUME", and the like. In the description below, the molding condition items and the control items not included in the molding conditions are collectively referred to simply as "set items S".

Each item identifying information entity set Ks includes an item identifying information entity K1, an item name K2, and a unit K3. The item identifying information entities K1 are pieces of information for identifying the set items S. What is set to each item identifying information entity K1 is a unique number (identification number) assigned to each set item S. What is set to each item name K2 is the name of the set item S identified by the corresponding item identifying information entity K1, and what is set to each unit K3 is the unit of the set value of the corresponding set item S. For the set items S with no units, the units K3 are left blank.

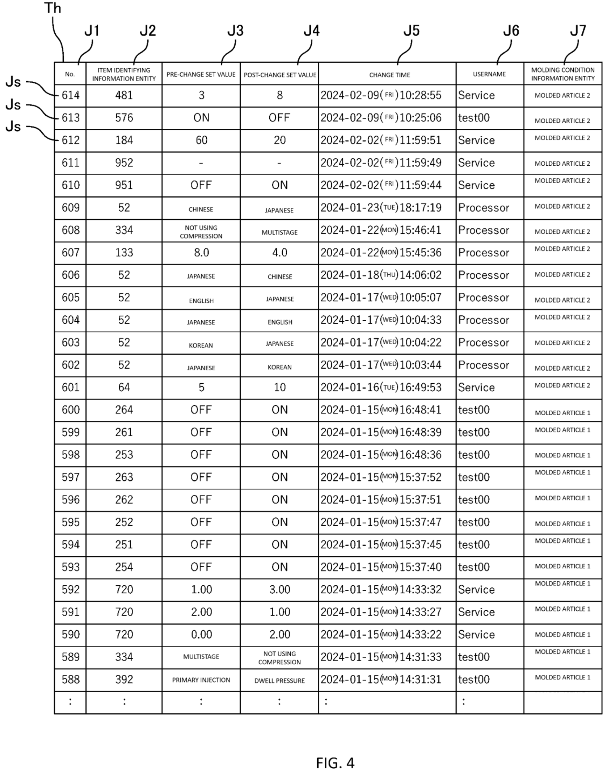

The storage device 73 also stores a change information entity table Th exemplified in FIG. 4. The change information entity table Th includes a change information entity set Js related to the set items S.

Each change information entity set Js includes a number J1, an item identifying information entity J2, a pre-change set value J3, a post-change set value J4, a change time J5, a username J6, and a molding condition information entity J7.

What is set to each number J1 is a number indicating the order of adding the change information entity set Js to the change information entity table Th. What is set to each item identifying information entity J2 is an identification number assigned to the set item S related to the change information entity set Js. What is set to each pre-change set value J3 is the set value of the set item S before change. What is set to each post-change set value J4 is a set value (new set value) of the set item S after the change. What is set to each change time J5 is the date and time of changing the set value of the set item S, that is, the date and time of setting the new set value to the set item S. What is set to each username J6 is a login username at the point of the change time J5. What is set to each molding condition information entity J7 is a piece of information (molding condition information entity) indicating the molding condition incorporated into the control device 78 for molding a molded article at the point of the change time J5. To the molding condition information entities J7 in the present embodiment, the names of the respective molding conditions (product names) are set. To the molding condition information entities J7, the file names of the respective molding conditions may be set.

The control device 78 has a computer. The control device 78 is communicably connected to the display device 71, the input device 72, and the storage device 73.

The control device 78 causes the display device 71 to display various kinds of information and operates in accordance with the operation input to the input device 72. It should be noted that the display device 71 and the input device 72 may be, for example, a tablet device, a laptop computer, and the like connected to the control device 78 by wireless communication.

The control device 78 is communicably connected to the clamp driving mechanism 23, the heaters 34, the screw driving mechanism 36, and the projection mechanism 41. The control device 78 controls the clamp driving mechanism 23, the heaters 34, the screw driving mechanism 36, the projection mechanism 41, and the like based on the molding condition read from the storage device 73 to perform molding operations of forming molded articles working with the molding machine body 10.

Then, a description is given to set screens and setting history screens to be displayed on the display device 71.

### Set Screen

The control unit 7 has a plurality of set screens for setting the set values to the set items S. When a predetermined set screen display operation is input to the input device 72 by an operator, the control device 78 causes the display device 71 to display a set screen corresponding to the set screen display operation.

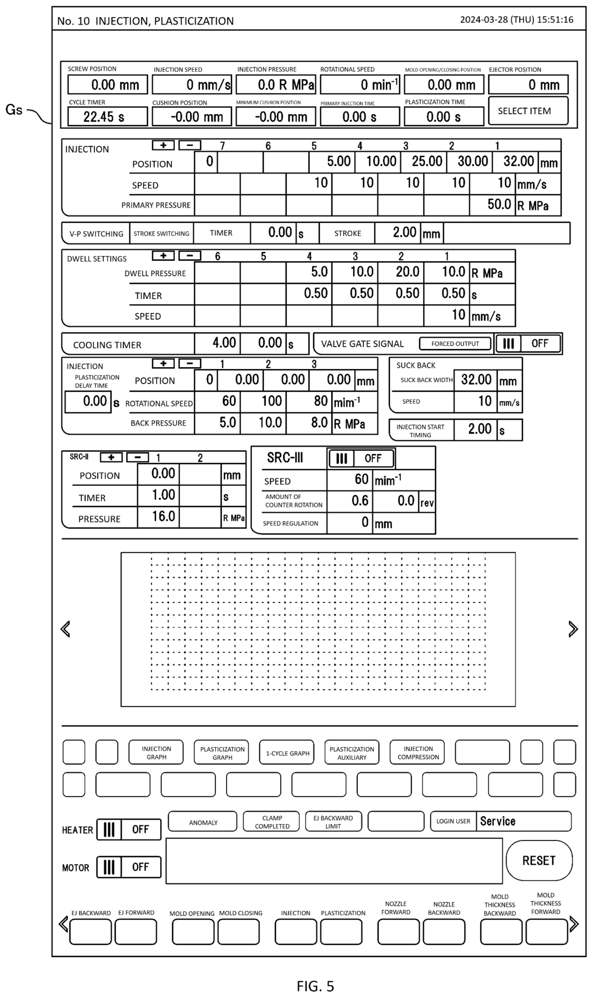

FIG. 5 illustrates an example of a set screen Gs for setting a set value to one of the molding condition items related to injection and plasticization. The set screen Gs displays the current set values of the molding condition items related to the injection and plasticization.

On an input of an operation of selecting one molding condition item from the plurality of molding condition items displayed on the set screen Gs to the input device 72 by the operator while the set screen Gs is displayed on the display device 71, the control device 78 causes an input screen (not shown), for inputting a set value to be set to the molding condition item selected by the operation, to be displayed superimposed on the set screen Gs. Examples of the input screen includes a numeric keypad screen, a screen containing a list of settable values, and the like. The operator then sets a new set value to the molding condition item using the input screen. When the new set value is set to the molding condition item, the control device 78 overwrites and updates the currently incorporated molding condition file stored in the storage device 73. It should be noted that similar set screens are prepared for the control items not included in the molding conditions.

Then, when the new set value is set to one of the set items S, the control device 78 generates a change information entity set Js related to the set item S and adds to the top (the topmost in FIG. 4) of the change information entity table Th. In the change information entity table Th illustrated in FIG. 4, the change information entity sets Js are aligned in reverse chronological order of the change times J5 from top to bottom. The change information entity table Th is capable of including, for example, a thousand change information entity sets Js. On generating a new change information entity set Js while the change information entity table Th is all filled up, the control device 78 deletes the oldest change information entity set Js at the bottom of the change information entity table Th and adds the newly generated change information entity set Js to the top of the change information entity table Th.

### Setting History Screen

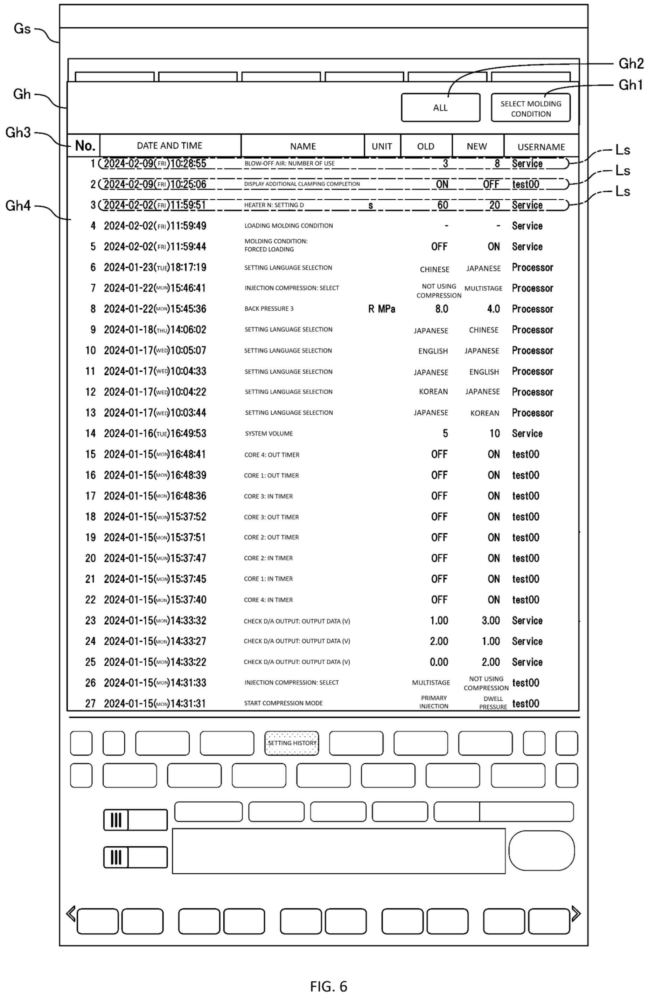

The control unit 7 has a setting history screen Gh for displaying the change information entity(-ies) related to changes in the set values of the set items S. When a predetermined setting history display operation is input to the input device 72 by the operator, the control device 78 causes the display device 71 to display the setting history screen Gh. FIGs. 6 through 9 illustrate examples of the setting history screen Gh. The setting history screen Gh displays a list of change information entities related to changes in the set values of the set items S. The setting history screen Gh is displayed, for example, superimposed on the set screen Gs.

The setting history screen Gh has a molding condition selection button Gh1, a molding condition display section Gh2, a change information entity name section Gh3, and a change information entity display section Gh4.

The molding condition selection button Gh1 and the molding condition display section Gh2 are arranged in lateral alignment in an upper portion of the setting history screen Gh.

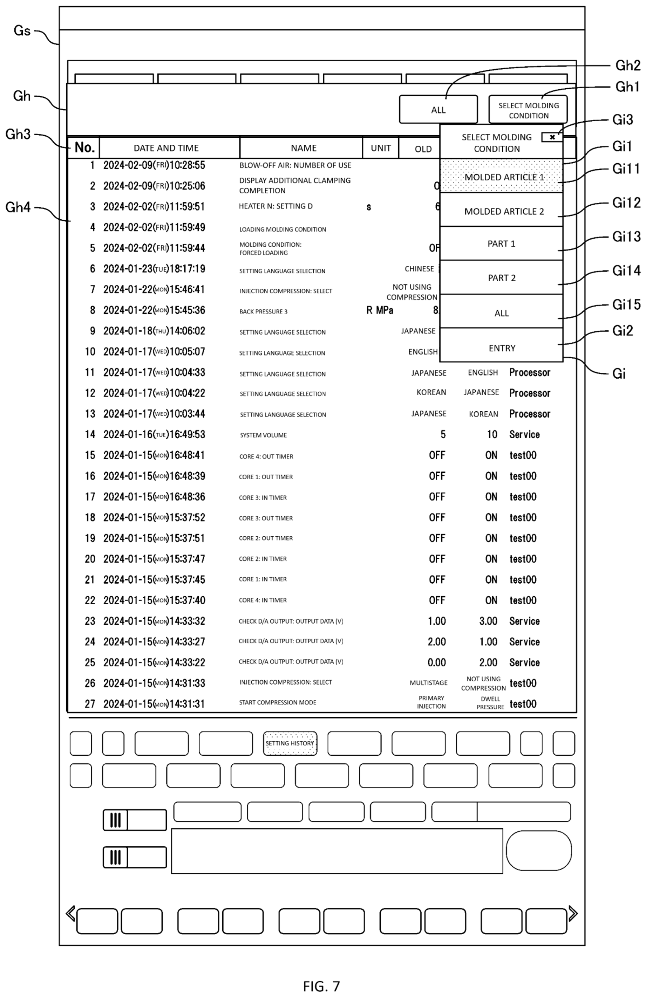

The molding condition selection button Gh1 is a button for displaying an input screen Gi. The operator selects the molding condition corresponding to the change information entity(-ies) to be displayed on the setting history screen Gh using the input screen Gi. On an input of an operation of tapping the molding condition selection button Gh1 to the input device 72 while the input screen Gi is not displayed, the control device 78 causes the input screen Gi to be displayed superimposed on the setting history screen Gh as illustrated in FIG. 7. The molding condition display section Gh2 displays the selected molding condition. If all the molding conditions are selected, "ALL" is displayed in the molding condition display section Gh2. In the control device 78, all the molding conditions are selected in an initial state immediately after starting.

The input screen Gi has a list section Gi1, an ENTRY button Gi2, and a close button Gi3.

The list section Gi1 includes a plurality of selection buttons. The control device 78 causes the plurality of selection buttons to be displayed in the list section Gi1. On the last selection button (lowest selection button) out of the selection buttons included in the list section Gi1, "ALL" is displayed in any case. On the other selection buttons, the names of the molding conditions are displayed. For example, if each molding condition information entity J7 of the change information entity sets Js included in the change information entity table Th is any one of "MOLDED ARTICLE 1", "MOLDED ARTICLE 2", "PART 1", or "PART 2", the control device 78 causes selection buttons Gi11 through Gi15 corresponding to "MOLDED ARTICLE 1", "MOLDED ARTICLE 2", "PART 1", "PART 2", and "ALL" to be displayed in the list section Gi1 as illustrated in FIG. 7. The term "ALL" refers to all the molding conditions. Similarly, if each molding condition information entity J7 of the change information entity sets Js included in the change information entity table Th is any one of "MOLDED ARTICLE 1" or "MOLDED ARTICLE 2", the control device 78 causes selection buttons Gi11 through Gi13 corresponding to "MOLDED ARTICLE 1", "MOLDED ARTICLE 2", and "ALL" to be displayed in the list section Gi1.

When an operation (selection operation 1) of tapping one of the plurality of selection buttons is input to the input device 72, the control device 78 causes the selection button selected by the operation to be highlighted (illustrated as a dotted region in FIG. 7). Subsequently, when an operation (selection operation 2) of tapping the ENTRY button Gi2 is input to the input device 72, the control device 78 assumes that the molding condition corresponding to the highlighted selection button is selected, causes the selected molding condition to be displayed in the molding condition display section Gh2, and closes the input screen Gi. When an operation of tapping the close button Gi3 is input to the input device 72, the control device 78 closes the input screen Gi without changing the currently selected molding condition. The selection operation 1 and the selection operation 2 are the selection operations of selecting the molding condition (molding condition information entity). It should be noted that the input screen Gi may allow a direct input of the molding condition name not by selecting the molding condition from a list.

The change information entity name section Gh3 is arranged below the molding condition selection button Gh1 and the molding condition display section Gh2. The control device 78 causes "No.", "DATE AND TIME", "NAME", "OLD", "NEW", "UNIT", and "USERNAME" to be displayed in the change information entity name section Gh3 aligned from left to right in order.

The change information entity display section Gh4 is arranged below the change information entity name section Gh3. The control device 78 causes the change information entity(-ies) related to change(s) in the set values of the set items S to be displayed in an alignment of the chronological order in the change information entity display section Gh4.

Specifically, the control device 78 extracts the change information entity set(s) Js in which the currently selected molding condition (what is displayed in the molding condition display section Gh2) is set to the molding condition information entity J7 from the plurality of change information entity sets Js included in the change information entity table Th. It should be noted that, if all the molding conditions are selected, all the change information entity sets Js are extracted. The control device 78 generates display information entity sets Ls to be displayed in the change information entity display section Gh4, each display information entity set Ls having the change time J5, the name and unit (the item name K2 and the unit K3 in the item identifying information entity table Ti) of the set item S identified by the item identifying information entity J2 (identification number), the pre-change set value J3, the post-change set value J4, and the username J6 of the corresponding change information entity set Js thus extracted in a row from left to right in order. In FIG. 6, although some of the display information entity sets Ls are surrounded by respective dash-dotted ellipses for the convenience of description, the ellipses are not actually displayed. In the change information entity display section Gh4, the change times J5, the item names K2, the units K3, the pre-change set values J3, the post-change set values J4, and the usernames J6 are arranged in correspondence with "DATE AND TIME", "NAME", "UNIT", "OLD", "NEW", and "USERNAME" in the change information entity name section Gh3. In addition, the control device 78 causes the respective display information entity sets Ls to be displayed aligned in reverse chronological order of the change times J5 from top to bottom. The plurality of display information entity sets Ls displayed in the change information entity display section Gh4 are scrollable in an up-down direction.

For example, if all the molding conditions are selected, the control device 78 extracts all of the plurality of the change information entity sets Js included in the change information entity table Th and causes the display information entity sets Ls generated using the change information entity sets Js thus extracted to be displayed in the change information entity display section Gh4 (FIG. 6).

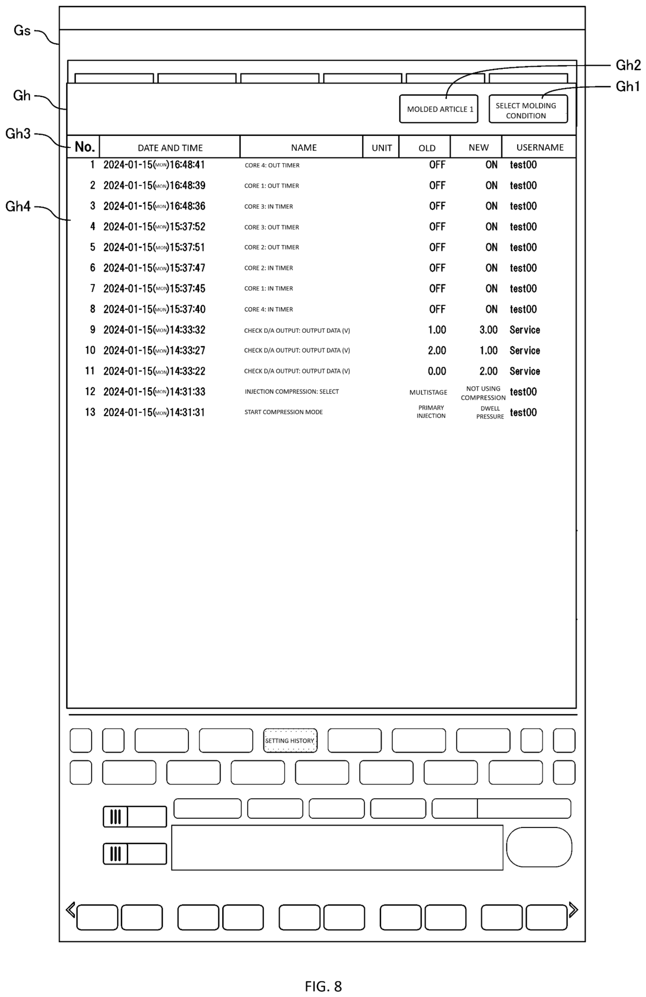

As another example, if the molding condition of the name "MOLDED ARTICLE 1" is selected, the control device 78 extracts the change information entity set(s) Js in which "MOLDED ARTICLE 1" is set to the molding condition information entity J7 from the plurality of the change information entity sets Js included in the change information entity table Th to cause the display information entity set(s) Ls generated using the change information entity set(s) Js thus extracted to be displayed in the change information entity display section Gh4 (FIG. 8).

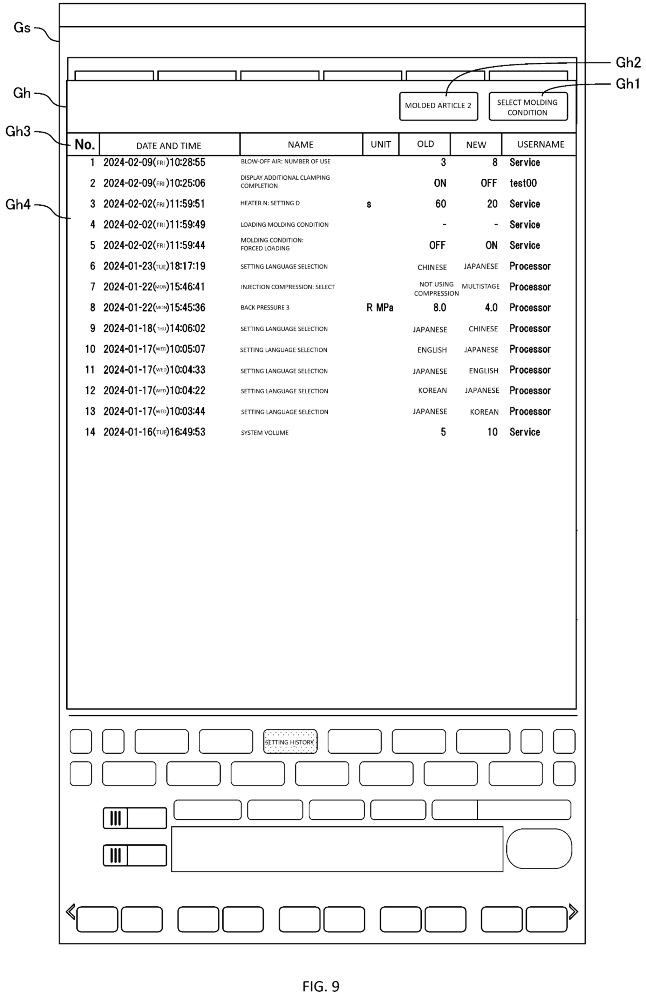

As another example, if the molding condition of the name "MOLDED ARTICLE 2" is selected, the control device 78 extracts the change information entity set(s) Js in which "MOLDED ARTICLE 2" is set to the molding condition information entity J7 from the plurality of the change information entity sets Js included in the change information entity table Th to cause the display information entity set(s) Ls generated using the change information entity set(s) Js thus extracted to be displayed in the change information entity display section Gh4 (FIG. 9).

The information entities (e.g., the pre-change set value J3, the post-change set value J4, and the change time J5) included in each display information entity set Ls are the change information entities related to changes in the set values of the set items S.

As just described, the injection molding machine 1 has: the storage device 73 configured to store the one or more change information entities, each change information entity related to a change in the set value of the corresponding set item S; and the control device 78 configured to cause the display device 71 to display the one or more change information entities. Each change information entity is stored in the storage device 73 corresponding to one of the molding conditions (molding condition information entities) incorporated into the control device 78 for molding a molded article at the time of changing the set value of the set item S. When a selection operation of selecting one of the molding conditions is input to the input device 72, the control device 78 extracts the one or more change information entities corresponding to the molding condition selected by the selection operation from the one or more change information entity sets Js stored in the storage device 73 to be displayed on the display device 71. Such a configuration allows selection of one molding condition from the plurality of molding conditions and display of only the change information entity(-ies) corresponding to the selected molding condition. It is thus possible to avoid displaying the change information entities corresponding to the plurality of molding conditions in a mixed manner and to suppress errors in referring to the one or more change information entities corresponding to each molding condition.

In addition, the control device 78 causes the display device 71 to display a list of the molding conditions (molding condition information entities) stored in the storage device 73 corresponding to the respective change information entities. The selection operation is an operation of selecting one from the molding conditions included in the list. Such a configuration facilitates selection of a desired molding condition from the molding conditions displayed in the list.

Still in addition, each change information entity includes at least the pre-change set value J3, the post-change set value J4, and the change time J5. Each change information entity may include the item identifying information entity J2 and/or information entities (the item name K2, the unit K3) related to the item identifying information entity J2. Such a configuration causes the one or more change information entities to be displayed, and it is thus possible to recognize the change details and the change times of the set values of the set items S.

Although the injection molding machine according to some embodiments of the present invention has been described herein, the present invention is not limited to the injection molding machine. Embodiments of the present invention are also applicable to other kinds of molding machine, such as a die casting machine.

The above description has been given to some embodiments of the present invention, but embodiments of the present invention are not limited to these examples. The scope of the present invention also includes the embodiments described above appropriately subjected to addition, cancellation, design change of any of the components by those skilled in the art and appropriate combinations of the features of the embodiments as long as not departing from the spirit of the present invention.

## Claims

1. A molding machine, comprising:
a storage device configured to store one or more change information entities, each change information entity related to a change in a set value of a set item; and
a control device configured to cause a display device to display the one or more change information entities, wherein
each change information entity is stored in the storage device corresponding to one of molding condition information entities indicating molding conditions incorporated into the control device for molding a molded article at a time of changing the set value of the set item, and
when a selection operation of selecting one of the molding condition information entities is input to an input device, the control device extracts the one or more change information entities corresponding to the molding condition information entity selected by the selection operation from the one or more change information entities stored in the storage device to be displayed on the display device.

2. The molding machine according to Claim 1, wherein the control device causes the display device to display a list of the molding condition information entities stored in the storage device corresponding to the respective change information entities, and
the selection operation is an operation of selecting one entity from the molding condition information entities included in the list.

3. The molding machine according to Claim 1, wherein each change information entity includes at least a pre-change set value, a post-change set value, and a change time.
